# EUROPÄISCHE PATENTSCHRIFT

(11) **EP 4 433 518 B1**
(45) Veröffentlichungstag und Bekanntmachung des Hinweises auf die Patenterteilung: **14.01.2026**
(21) Anmeldenummer: 22817942.0
(22) Anmeldetag: 15.11.2022
(51) Int. Cl.: C08F 251/02, C08L 51/02, C08F 2/12, C08F 2/20, C08F 4/34

(54) **VERFAHREN ZUR HERSTELLUNG VON POLYMERISATEN**
METHOD FOR THE PREPARATION OF POLYMERISATES
PROCÉDÉ DE PRODUCTION DE POLYMÉRISATS

(30) Priorität: 18.11.2021 EP 21208890
(43) Veröffentlichungstag der Anmeldung: 25.09.2024
(73) Patentinhaber: LANXESS Deutschland GmbH, 50569 Köln (DE)
(72) Erfinder: KRISCHEL, Julian, 51065 Köln (DE)
(86) Internationale Anmeldenummer: PCT/EP2022/081892
(87) Internationale Veröffentlichungsnummer: WO 2023/088864

(56) Entgegenhaltungen:
- CN-B- 106 632 788
- US-A1- 2016 075 800

## Beschreibung

Die Erfindung betrifft die Herstellung eines Polymers in Gegenwart eines Dispergiermittelgemisches und dessen Verwendung zur Herstellung des Polymers um daraus Ionenaustauscher herzustellen.

Es ist bekannt, dass Polymerisate aus beispielsweise vinylaromatischen Verbindungen, wie z.B. Styrol, zusammen mit Vernetzungsmitteln, wie z.B. Divinylbenzol, mittels Suspensionspolymerisation hergestellt werden können.

In der Suspensionspolymerisation wird eine Monomerphase, die einen im Monomer löslichen Initiator enthält, in einer mit dem Monomer im Wesentlichen nicht mischbaren Phase in Form von Tröpfchen zerteilt und durch Temperaturerhöhung ausgehärtet. Die nicht-mischbare Phase ist üblicherweise eine wässrige Phase, die Additive, wie Salze, Dispergiermittel bzw. Schutzkolloide oder andere wasserlösliche organische Verbindungen enthalten kann und auch als kontinuierliche Phase bezeichnet wird. Ein Gemisch aus ausgewählten, wasserunlöslichen Monomeren und darin gelösten Additiven und Initiatoren bildet dann die dispergierte Phase.

Neben gelförmigen Polymerisaten können bei der Suspensionspolymerisation durch die Verwendung von Porogenen, wie beispielsweise hochsiedende, aliphatische Kohlenwasserstoffe, Alkohole, Äther, Nitroverbindungen oder Ester, auch makroporöse Polymerisate, erzeugt werden.

Aus F. Jahanzad, S. Sajjadi, B. Brooks, Polymer 2013, 54, 16-23, ist bekannt, dass es während einer Suspensionspolymerisation von Methylmethacrylat zu Teilen auch gleichzeitig zu einer Emulsionspolymerisation und damit auch zur Bildung von unerwünschtem polymeren Feinanteil kommt. Der polymere Feinanteil, der durch die Emulsionspolymerisation entsteht, kann dabei durch die Zugabe eines in der wässrigen Phase löslichen Radikalinhibitors reduziert werden.

Aus der EP-A-0964002 ist ein Verfahren zur Herstellung von gelförmigen Perlpolymerisaten mit einem verminderten Anteil an löslichen Polymeren bekannt. Um den löslichen Anteil zu reduzieren wird in diesem Verfahren ein Peroxyester als Initiator eingesetzt.

CN 106 632 788 B discloses a method for ultrasonically assisting preparation of macroporous ion exchange resins.

US 2016/075800 A1 relates to a process for the preparation of monodisperse polymer particles.

Im Hinblick auf den bekannten Stand der Technik bleibt weiterhin Bedarf nach einem Verfahren, mit dem der polymere Feinanteil bei der Herstellung von makroporösen Polymerisaten reduziert werden kann.

Es wurde jetzt überraschend gefunden, dass der polymere Feinanteil vermindert werden kann, wenn eine spezielle Dispergiermittelmischung während der Polymerisation eingesetzt wird.

Gegenstand der Erfindung ist daher ein Verfahren zur Herstellung eines Polymers, bei dem, wenigstens eine monoethylenisch ungesättigte Verbindung und wenigstens eine multiethylenisch ungesättigte Verbindung, in Gegenwart mindestens eines Initiators, in Gegenwart von Wasser, in Gegenwart eines Porogens und in Gegenwart eines Dispergiermittelgemisches umfassend
a) mindestens eine Hydroxyalkylmethylcellulose mit einem zahlenmittleren Molekulargewicht von 80000 g/mol bis 110000 g/mol und
b) mindestens eine Hydroxyalkylmethylcellulose mit einem zahlenmittleren Molekulargewicht von 25000 g/mol bis 42000 g/mol
umgesetzt werden.

Der Begriff "Molekulargewicht" bezieht sich in der Anmeldung auf das zahlenmittlere Molekulargewicht, wenn es nicht explizit anders angegeben oder präzisiert wurde.

Bevorzugt werden als Hydroxyalkylmethylcellulosen unter a.) Hydroxypropylmethylcellulose und/oder Hydroxyethylmethylcellulose mit einem Molekulargewicht von 80000 g/mol bis 110000 g/mol eingesetzt.

Bevorzugt werden als Hydroxyalkylmethylcellulosen unter b.) Hydroxypropylmethylcellulose und/oder Hydroxyethylmethylcellulose mit einem Molekulargewicht von 25000 g/mol bis 42000 g/mol eingesetzt.

Bevorzugt wird unter a) 2-Hydroxypropylmethylcellulose mit einem 2-Hydroxypropylsubstitutionsgrad von 3 bis 15 mol% und einem Methoxysubstitutionsgrad von 26 bis 31 mol% und einem Molekulargewicht von 80000 g/mol bis 110000 g/mol eingesetzt.

Bevorzugt wird unter a.) Hydroxyethylmethylcellulose mit einem Methoxysubstitutionsgrad von 26 bis 31 mol% und einem Hydroxyethoxysubstitutiongrad von 5 bis 15 mol% und einem Molekulargewicht von 80000 bis 110000 g/mol eingesetzt.

Bevorzugt wird unter b) 2-Hydroxypropylmethylcellulose mit einem 2-Hydroxypropylsubstitutionsgrad von 3 bis 15 mol% und mit einem Methoxysubstitutionsgrad von 18 bis 25 mol% und einem Molekulargewicht von 25000 g/mol bis 42000 g/mol,

Bevorzugt wird unter b) Hydroxyethylmethylcellulose mit einem Methoxysubstitutionsgrad von 18 bis 25 mol% und einem Hydroxyethoxysubstitutionsgrad von 5 bis 15 mol% und einem Molekulargewicht von 25000 bis 42000 g/mol eingesetzt.

Besonders bevorzugt wird eine Mischung umfassend a) 2-Hydroxypropylmethylcellulose mit einem 2-Hydroxypropylsubstitutionsgrad von 3 bis 15 mol% und einem Methoxysubstitutionsgrad von 26 bis 31 mol% und einem Molekulargewicht von 80000 g/mol bis 110000 g/mol und b) 2-Hydroxypropylmethylcellulose mit einem 2-Hydroxypropylsubstitutionsgrad von 3 bis 15 mol% und mit einem Methoxysubstitutionsgrad von 18 bis 25 mol% und einem Molekulargewicht von 25000 g/mol bis 42000 g/mol eingesetzt.

Ganz besonders bevorzugt wird eine Mischung umfassend a) 2-Hydroxypropylmethylcellulose mit einem 2-Hydroxypropylsubstitutionsgrad von 3 bis 8 mol% und einem Methoxysubstitutionsgrad von 26 bis 31 mol% und einem Molekulargewicht von 80000 g/mol bis 110000 g/mol und b) 2-Hydroxypropylmethylcellulose mit einem 2-Hydroxypropylsubstitutionsgrad von 6 bis 13 mol% und mit einem Methoxysubstitutionsgrad von 18 bis 25 mol% und einem Molekulargewicht von 25000 g/mol bis 42000 g/mol eingesetzt.

Die Hydroxyalkylmethylcellulosen unter a.) und b.) sind bekannt und können nach allgemein bekannten Verfahren, z.B. durch Umsetzung von Cellulose mit einem Alkalihydroxid und nachfolgender Reaktion mit einem Alkylhalogenid hergestellt werden.

Zudem sind die Hydroxyalkylmethylcellulosen kommerziell erhältlich. Insbesondere bevorzugt werden als Hydroxyalkylmethylcellulosen unter a) Methocel^{™} F4M (2-Hydroxypropylmethylcellulose mit einem Molekulargewicht von 95000 g/mol) (DOW Chemical Company) (CAS Nr.: 9004-65-3), Walocel^{™} VPM 4937 (CAS Nr.: 9032-42-2) (Hydroxyethylmethylcellulose mit einem Molekulargewicht von 100000 g/mol) und Tylose^{®} E707002 (CAS Nr.: 9004-65-3) (2-Hydroxypropylmethylcellulose mit einem Molekulargewicht von 95000 g/mol) oder Mischungen dieser Verbindungen eingesetzt.

Insbesondere bevorzugt werden als Hydroxyalkylmethylcellulosen unter b) Methocel^{™} K100 (2-Hydroxypropylmethylcellulose mit einem Molekulargewicht von 33500 g/mol) (CAS Nr.: 9004-65-3), und Metolose^{™} 90SH-100 (CAS Nr.: 9004-65-3) (2-Hydroxypropylmethylcellulose mit einem Molekulargewicht von 33000 g/mol) oder Mischungen dieser Verbindungen eingesetzt.

Die bevorzugt unter a) eingesetzte 2-Hydroxypropylmethylcellulose mit einem 2-Hydroxypropylsubstitutionsgrad von 3 bis 15 mol% und einem Methoxysubstitutionsgrad von 26 bis 31 mol% und einem Molekulargewicht von 80000 g/mol bis 110000 g/mol eingesetzt, weist vorzugsweise eine Viskosität von 3000 bis 9000 mPas auf.

Die bevorzugt unter a) eingesetzte Hydroxyethylmethylcellulose mit einem Methoxysubstitutionsgrad von 26 bis 31 mol% und einem Hydroxyethoxysubstitutiongrad von 5 bis 15 mol% und einem Molekulargewicht von 80000 bis 110000 g/mol eingesetzt, weist vorzugsweise eine Viskosität von 3000 bis 9000 mPas auf.

Die bevorzugt unter b) eingesetzte 2-Hydroxypropylmethylcellulose mit einem 2-Hydroxypropylsubstitutionsgrad von 3 bis 15 mol% und mit einem Methoxysubstitutionsgrad von 18 bis 25 mol% und einem Molekulargewicht von 25000 g/mol bis 42000 g/mol weist vorzugsweise eine Viskosität von 80 bis 500 mPas auf.

Bevorzugt wird unter b) Hydroxyethylmethylcellulose mit einem Methoxysubstitutionsgrad von 18 bis 25 mol% und einem Hydroxyethoxysubstitutionsgrad von 7 bis 10 mol% und einem Molekulargewicht von 25000 bis 42000 g/mol weist vorzugsweise eine Viskosität von 80 bis 500 mPas auf.

Die unter a) und b) eingesetzte 2-Hydroxypropylmethylcellulose und Hydroxyethylmethylcellulose weisen vorzugsweise eine thermische Gelierungstemperatur > 60 °C auf.

Die Hydroxyalkylmethylcellulosen unter a) und b) können in beliebigen Verhältnissen miteinander vermischt werden. Vorzugsweise ist das Gewichtsverhältnis der Hydroxyalkylmethylcellulosen a) und b) 3 : 1 bis 1: 1.

Vorzugsweise beträgt die Summe der Konzentration der Hydroxyalkylmethylcellulosen aus a) und b) 0.15 - 0.3 Gew.% bezogen auf die wässrige Phase.

Der molare Substitutionsgrad der Hydroxylpropylgruppen und der Methoxygruppen der 2-Hydroxypropylmethylcellulose wird bestimmt nach der ASTM D-2363-72/USA.

Der molare Substitutionsgrad der Methoxygruppen der Hydroxyethylmethylcellulose wird bestimmt nach der ASTM D-1347-72/USA.

Der molare Substitutionsgrad der Hydroxyethoxygruppen der Hydroxyethylmethylcellulose wird bestimmt nach der ASTM D-2364-75/USA.

Weiterhin kann der molare Substitutionsgrad durch ¹H-NMR und ¹³C-NMR-Spektroskopie bestimmt werden.

Das Molekulargewicht der Hydroxyalkylmethylcellulose kann gemäß der Methode aus Journal of Polymer Science and Technology, 39(4), 293-298(1982) bestimmt werden.

Die thermische Gelierungstemperatur kann gemäß Abschnitt [0028] der EP-B1-1983004 bestimmt werden.

Die Viskosität der Hydroxyalkylmethylcellulosen kann nach allgemeinen dem Fachmann bekannten Verfahren, vorzugsweise unter Verwendung eines Rotationsviskosimeters bei 25 °C, bestimmt werden.

Bei der 2-Hydroxypropylmethylcellulose handelt es sich vorzugsweise um Poly(O-2-hydroxypropyl,O-methyl)cellulose (CAS Nr.: 9004-65-3). Bei der Hydroxyethylmethylcellulose handelt es sich vorzugsweise um 2-Hydroxyethylmethylcellulose (CAS Nr.: 9032-42-2).

Die Zugabe der Hydroxyalkylmethylcellulosen a) und b) zur Reaktion in dem erfindungsgemäßen Verfahren kann separat erfolgen. Es können aber ebenfalls die Hydroxyalkylmethylcellulosen zunächst vermischt und dann zu der Reaktionsmischung hinzugegeben werden oder die Hydroxyalkylmethylcellulosen werden als Mischung vorgelegt und die Puffersubstanzen, Monomeren, Vernetzer, Porogene und Initiatoren hinzugegeben. Dies kann nacheinander oder als Gemisch erfolgen. Vorzugsweise werden die Hydroxyalkylmethylcellulosen a) und b) zunächst vermischt und vorgelegt. Dann werden vorzugsweise die Puffersubstanzen hinzugegeben. Danach erfolgt vorzugsweise **die Zugabe** der mono- und multiethylenischen Verbindungen, der Porogene und der Initiatoren als Mischung zu den Hydroxyalkaylmethylcellulosen..

In dem erfindungsgemäßen Verfahren wird wenigstens eine monoethylenisch ungesättigte Verbindung und wenigstens eine multiethylenisch ungesättigte Verbindung eingesetzt.

Es ist jedoch auch möglich, Mischungen zweier oder mehrerer monoethylenisch ungesättigter Verbindungen und Mischungen zweier oder mehrerer multiethylenisch ungesättigter Verbindungen einzusetzen.

Monoethylenisch ungesättigte Verbindungen (Monomere) im Sinne der Erfindung sind Verbindungen die eine radikalisch polymerisierbare C=C Doppelbindung pro Molekül aufweisen. Bevorzugte Verbindungen dieser Art umfassen aromatische, monoethylenisch ungesättigte Verbindungen, wie beispielsweise Vinyl- und Vinylidenderivate des Benzols und des Naphthalins, wie vorzugsweise Vinylnaphthalin, Vinyltoluol, Ethylstyrol, α-Methylstyrol, Chlorstyrole, vorzugsweise Styrol, sowie nicht-aromatische Vinyl- und Vinylidenverbindungen, wie vorzugsweise Acrylsäure, Methacrylsäure, Acrylsäure-C₁-C₈-alkylester, Methacrylsäure-C₁-C₈-alkylester, Acrylnitril, Methacrylnitril, Acrylamid, Methacrylamid, Vinylchlorid, Vinylidenchlorid und Vinylacetat. Vorzugsweise werden die nicht-aromatischen monoethylenisch ungesättigten Verbindungen in untergeordneten Mengen, vorzugsweise in Mengen von 0,1 bis 50 Gew.%, besonders bevorzugt 0,5 bis 20 Gew.-%, bezogen auf aromatische monoethylenisch ungesättigten Verbindungen, eingesetzt. Bevorzugt werden ausschließlich aromatische, monoethylenisch ungesättigte Verbindungen verwenden.

Die monoethylenisch ungesättigten Verbindungen werden bevorzugt in Mengen > 50 Gew.%, bezogen auf die Mischung aus monoethylenisch und multiethylenisch, ungesättigten Verbindungen, besonders bevorzugt von 80 Gew. % bis 98 Gew. % bezogen auf die Mischung aus monoethylenisch und multiethylenisch, ungesättigten Verbindungen, eingesetzt.

Als aromatische, monoethylenisch ungesättigte Verbindungen im Sinne der vorliegenden Erfindung werden in dem erfindungsgemäßen Verfahren bevorzugt Styrol, Vinyltoluol, Ethylstyrol, α-Methylstyrol, Chlorstyrol, oder Chlormethylstyrol eingesetzt.

Insbesondere bevorzugt wird Styrol oder Mischungen aus Styrol mit den vorgenannten Monomeren, bevorzugt mit Ethylstyrol, eingesetzt.

Multiethylenische ungesättigte Verbindungen sind Verbindungen, die zwei oder mehr, vorzugsweise zwei bis vier radikalisch polymerisierbare C=C Doppelbindungen pro Molekül enthalten. Vorzugsweise sind aromatische, multiethylenische ungesättigte Verbindungen Divinylbenzol, Divinyltoluol, Trivinylbenzol, Divinylnaphthalin, Triallylcyanurat, Triallylisocyanurat und Trivinylnaphthalin. Vorzugsweise sind nicht-aromatische multiethylenische ungesättigte Verbindungen Diethylenglycoldivinylether, Octadien-1,7, Hexadien-1,5, Ethylenglycoldimethacrylat, Triethylenglycoldimethacrylat, Trimethylolpropantrimethacrylat, Allylmethacrylat und Methylen-N,N'-bisacrylamid. Als multiethylenische, ungesättigte Verbindung wird besonders bevorzugt Divinylbenzol eingesetzt. Für die meisten Anwendungen sind kommerzielle Divinylbenzolqualitäten, die neben den Isomeren des Divinylbenzols auch Ethylvinylbenzol enthalten, ausreichend.

Bevorzugte multiethylenische ungesättigte Verbindungen im Sinne der vorliegenden Erfindung sind im erfindungsgemäßen Verfahren Divinylbenzol, Divinyltoluol, Trivinylbenzol, Divinylnaphthalin, Triallylcyanurat, Triallylisocyanurat oder Trivinylnaphtalin. Insbesondere bevorzugt wird Divinylbenzol eingesetzt.

Die multiethylenisch ungesättigten Verbindungen werden bevorzugt in Mengen von 1-20 Gew.-%, besonders bevorzugt 2-12 Gew.-%, insbesondere bevorzugt 4-10 Gew.-%, bezogen auf die Menge an monoethylenisch ungesättigten Verbindungen eingesetzt. Die Art der multiethylenisch ungesättigten Verbindungen (Vernetzer) wird im Hinblick auf die spätere Verwendung des Polymerisats ausgewählt.

Die Ausbildung makroporöser Polymerisate erfolgt durch Zusatz von wenigstens einem Porogen, zu den monoethylenisch ungesättigten Verbindungen und multiethylenisch ungesättigten Verbindungen bei der Polymerisation, um im Polymerisat eine makroporöse Struktur zu erzeugen. Insbesonders bevorzugte Porogene sind Hexan, Octan, Isooctan, Isododecan, Pentamethylheptan, Methylethylketon, Butanol oder Octanol und deren Isomeren. Ganz besonders bevorzugt wird Isododecan als Porogen eingesetzt. Es sind vor allem organische Substanzen geeignet, die sich in den monoethylenisch ungesättigten Verbindungen lösen, das Polymerisat aber schlecht lösen bzw. quellen (Fällmittel für Polymere), beispielsweise aliphatische Kohlenwasserstoffe. Als makroporöse Polymerisate gelten vorzugsweise Polymerisate mit einer BET-Oberfläche von 20 bis 100 m²/g.

Porogene werden bevorzugt in einer Menge von 25 Gew. % bis 45 Gew.% bezogen auf die Menge der organische Phase eingesetzt.

Die gemäß dem erfindungsgemäßen Verfahren hergestellten Polymerisate können in heterodisperser oder monodisperser Form hergestellt werden.

Die dem Verfahren zugrundeliegende Suspensionspolymerisation führt vorzugsweise zu heterodispersen Polymerisaten.

Bevorzugt werden heterodisperse Polymerisate in dem erfindungsgemäßen Verfahren hergestellt.

Besonders bevorzugt werden im Herstellungsverfahren makroporöse Polystyrol-Divinylbenzol Copolymerisate hergestellt.

Der Rahmen der Erfindung umfasst alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Kombination.

In einer bevorzugten Ausführungsform der vorliegenden Erfindung kommen vorzugsweise in dem erfindungsgemäßen Verfahren mikroverkapselte Monomertröpfchen bei der Herstellung von monodispersen Polymerisaten zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Bevorzugt ist die Phasengrenzflächenkondensation, bei der eine im Monomertröpfchen gelöste Reaktivkomponente (insbesondere ein Isocyanat oder ein Säurechlorid) mit einer zweiten, in der wässrigen Phase gelösten Reaktivkomponente (insbesondere einem Amin), zur Reaktion gebracht wird.

Die heterodispersen oder gegebenenfalls mikroverkapselten, monodispersen Monomertröpfchen enthalten vorzugsweise wenigstens einen Initiator oder Mischungen von Initiatoren (Initiatorkombination) zur Auslösung der Polymerisation. Für das erfindungsgemäße Verfahren bevorzugte Initiatoren sind Peroxyverbindungen, insbesondere bevorzugt Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-etylhexan, sowie Azoverbindungen, wie 2,2'-Azobis(isobutyronitril) oder 2,2'-Azobis(2-methylisobutyronitril). Besonders bevorzugt wird als Initiator Dibenzoylperoxid eingesetzt. Ganz besonders bevorzugt wird als Initiator tert.-Butylperoxy-2-ethyl-hexanoat eingesetzt, wenn ein Inhibitor verwendet wird.

Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Das gegebenenfalls, monodisperse, mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Bei der Herstellung von monodispersen oder heterodispersen Polymerisaten in dem erfindungsgemäßen Verfahren kann die wässrige Phase in einer weiteren bevorzugten Ausführungsform einen gelösten Polymerisationsinhibitor enthalten. Als Inhibitoren kommen in diesem Fall sowohl anorganische als auch organische Stoffe in Frage. Bevorzugte anorganische Inhibitoren sind Übergangsmetallsalze, wie Kupfer(II)chlorid, Kupfer(Il)sulfat, Eisen(III)chlorid, Eisen(II)sulfat, Mangan(II)chlorid und anorganische Stickstoffverbindungen, insbesondere bevorzugt Hydroxylamin, Hydrazin, Natriumnitrit und Kaliumnitrit, Salze der phosphorigen Säure wie Natriumhydrogenphosphit sowie schwefelhaltige Verbindungen, wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere bevorzugte organische Inhibitoren sind organische stickstoffhaltige Verbindungen. Insbesondere bevorzugt sind Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate, wie vorzusgweise N,N-Hydrazino-diessigsäure, Nitrosoverbindungen wie vorzugsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt vorzugsweise 5 - 1000 ppm (bezogen auf die wässrige Phase), besonders bevorzugt 10 - 500 ppm, ganz besonders bevorzugt 10 - 250 ppm.

Bevorzugt wird mindestens ein Polymerisationsinhibitor in dem erfindungsgemäßen Verfahren eingesetzt. Besonders bevorzugt werden als Inhibitoren Natriumnitrit oder Resorcin eingesetzt.

Neben der gemäß des erfindungsgemäßen Verfahrens eingesetzten Dispergiermittelmischung könnten auch weitere Dispergiermittel zugesetzt werden. Als zusätzliche Dispergiermittel eignen sich natürliche oder synthetische wasserlösliche Polymere, bevorzugt Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Insbesondere bevorzugt ist Gelatine. Die Einsatzmenge der zusätzlich eingesetzten Dispergiermittel beträgt im Allgemeinen 0,05 bis 10 Gew.-% bezogen auf die erfindungsgemäß eingesetzte Dispergiermittelmischung aus a) und b), vorzugsweise 0,05 bis 5 Gew.-%. Bevorzugt werden neben der gemäß des erfindungsgemäßen Verfahrens eingesetzten Dispergiermittelmischung keine weiteren Dispergiermittel zugesetzt.

Die Polymerisation zum heterodispersen oder monodispersen Polymerisat kann in einer alternativen bevorzugten Ausführungsform in Anwesenheit eines Puffersystems durchgeführt werden. Bevorzugt werden Puffersysteme, die den pH-Wert der wässrigen Phase vor der Polymerisation auf einen Wert zwischen 14 und 6, vorzugsweise zwischen 12 und 8 einstellen. Unter diesen Bedingungen liegen Dispergiermittel mit Carbonsäuregruppen ganz oder teilweise als Salze vor. Auf diese Weise wird die Wirkung der Dispergiermittel günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt vorzugsweise 0,5 - 500 mmol/l, besonders bevorzugt 2,5 - 100 mmol/I.

Die Rührgeschwindigkeit bei der Polymerisation zum monodispersen Polymerisat ist weniger kritisch und hat im Gegensatz zur herkömmlichen Polymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von Monomertröpfchen zu wässriger Phase beträgt vorzugsweise 1 : 0,75 bis 1 : 20, besonders bevorzugt 1 : 1 bis 1 : 6. Unabhängig davon, ob heterodisperse oder monodisperse Polymerisate hergestellt werden.

Die Polymerisationstemperatur zum heterodispersen oder monodispersen Polymerisat richtet sich nach der Zerfallstemperatur des eingesetzten Initiators. Sie liegt vorzugsweise zwischen 50 bis 180°C, besonders bevorzugt zwischen 55 und 130°C. Die Polymerisation dauert vorzugsweise 0,5 bis etwa 20 Stunden. Es hat sich bewährt, ein Temperaturprogramm anzuwenden, bei dem die Polymerisation bei niedriger Temperatur, vorzugsweise 60°C, begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das Polymerisat mit üblichen Methoden, beispielsweise durch Filtrieren oder Dekantieren, isoliert und gegebenenfalls gewaschen.

Die Herstellung der monodispersen Polymerisate mit Hilfe des Jetting Prinzipes oder des Seed-Feed-Prinzip ist aus dem Stand der Technik bekannt und z.B. in US-A 4 444 961, EP-A 0 046 535, US 4 419 245 oder WO 93/12167 beschrieben.

Bevorzugt erfolgt die Herstellung der monodispersen Polymerisate mit Hilfe des Jetting Prinzips oder des Seed-Feed-Prinzips.

Bevorzugt wird in dem erfindungsgemäßen Verfahren ein makroporöses, heterodisperses Polymerisat hergestellt.

Die makroporösen Polymerisate werden vorzugsweise zur Herstellung von Ionenaustauschern verwendet. So können die makroporösen Polymerisate durch bekannte Verfahren, wie Sulfonierung oder Chlormethylierung oder Phthalamidierung und Umsetzung mit Alkylaminen zu Kationen- oder Anionenaustauscher und Chelatharze funktionalisiert werden.

Daher ist von der Erfindung ebenfalls die Verwendung eines Dispergiermittelgemisches umfassend
a) mindestens eine Hydroxyalkylmethylcellulose mit einem Molekulargewicht von 80000 g/mol bis 110000 g/mol
   und
b) mindestens eine Hydroxyalkylmethylcellulose mit einem Molekulargewicht von 25000 g/mol bis 42000 g/mol
zur Herstellung eines makroporösen Polymerisates umfasst.

Zudem betrifft die Erfindung die Verwendung des mit dem Dispergiermittelgemisch hergestellten makroporösen Polymerisates zur Herstellung von Ionenaustauschern.

### Methoden

### Bestimmung des polymeren Feinanteils

Zur Bestimmung des polymeren Feinanteils wurde das Reaktionsgemisch umfassend das Polymerisat und die wässrige Phase über einem Sieb mit einer Maschenweite von 100 µm gesiebt. Das Filtrat dieser Filtration wurde wiederrum über ein 20 µm Sieb gegeben. Somit konnte der polymere Feinanteil als Zielkornfraktion von 20 bis 100 µm definiert und quantifiziert werden. Jeglicher Feinanteil, als auch die wässrige Phase die im 20 µm Sieb zurückblieb wurde eingedampft und bis zur Massenkonstanz getrocknet. Der polymere Feinanteil wurde dann gravimetrisch bestimmt und bezogen auf die Ausbeute des Polymeren in Prozent berechnet.

### Beispiele

### Beispiel 1

### (erfindungsgemäß)

In einem Glasreaktor wird entionisiertes Wasser (869 mL) und 96.6 g einer wässrigen 2 w% Lösung bestehend aus a.) 2-Hydroxypropylmethylcellulose (HPMC), CAS: 9004-65-3, durchschnittliche Viskosität 2% in Wasser @20°C: 4550 mPas, Methoxyl: 28.5 mol%, Hydroxypropyl: 5,75 mol%) und einem zahlenmittleren Molekulargewicht von 95000 g/mol (Typ A) und b.) 2-Hydroxypropylmethylcellulose (HPMC), CAS: 9004-65-3, durchschnittliche Viskosität, 2% in Wasser @20°C: 100 mPas, Methoxyl: 21.5 mol%, Hydroxypropyl: 9.5 mol%) und einem zahlenmittleren Molekulargewicht von 33500 g/mol (Typ B) (Gewichtsverhältnis 1:1) vorgelegt. In diese Lösung wird zusätzlich Dinatriumhydrogenphosphatdecahydrat (4.69 g, 0.48 w.%, bezogen auf wässrige Phase) gelöst. Der pH-Wert der wässrigen Phase wird dann durch Zugabe von NaOH (1 M, 8-12 mL) auf einen Wert von 11 eingestellt. Zu dieser wässrigen Phase wird eine Mischung aus Styrol (540.3 g, 80.4w%,), Divinylbenzol (5.5 w.%, 59.7 g), Isododecan (351.5 g (32 w.%)) und Dibenzoylperoxid (BPO) (4.69 g, (0.43 w%) (bezogen auf organische Phase) hinzugegeben. In das Gefäß wird ein Stickstoffstrom von 20 I/h eingeleitet. Der Ansatz wird zunächst bei 190 rpm für 1 h auf 73 °C aufgeheizt, dann 7 h bei dieser Temperatur gehalten, dann über eine Stunde hinweg auf 95 °C geheizt und wieder für 2 h bei dieser Temperatur gehalten und dann auf Raumtemperatur abgekühlt. In diesem Beispiel wurden 559 g Polymerisat und ein Feinanteil von 3.9 g isoliert.

### Beispiel 2

### (erfindungsgemäß)

Das Beispiel 1 wird wiederholt, wobei anstelle des Initiators Benzoylperoxid (BPO) 3,23 g tert.-Butylperoxy-2-ethylhexanoat (T21s) eingesetzt wird. In diesem Beispiel wurden 582 g Polymerisat und ein Feinanteil von 5.7 g isoliert.

### Beispiel 3

### (erfindungsgemäß)

Das Beispiel 1 wird wiederholt, wobei anstelle des Initiators Benzoylperoxid (BPO) 3,23 g tert.-Butylperoxy-2-ethyhexanoat (T21s) eingesetzt wird. Zusätzlich wird Resorcin (c = 0.08 g/L in der wässrigen Phase) zur wässrigen Phase hinzugegeben. In diesem Beispiel wurden 587 g Polymerisat und ein Feinanteil von 3.1 g isoliert.

### Beispiel 4

### (nicht erfindungsgemäß, auf die Verwendung eines niedrigmolekularen Dispergiermittels Komponente b.) wurde verzichtet)

In einem Glasreaktor wird entionisiertes Wasser (869 mL) und 96.6 g einer wässrigen 2 w% Lösung aus 2-Hydroxypropylmethylcellulose (HPMC), CAS: 9004-65-3, durchschnittliche Viskosität 2% in Wasser @20°C: 4550 mPas, Methoxyl: 28.5 mol%, Hydroxypropyl: 5.75 mol%) und einem zahlenmittleres Molekulargewicht von 95000 g/mol (Typ A) vorgelegt. In dieser Lösung wird zusätzlich Dinatriumhydrogenphosphatdecahydrat (4.69 g, 0.48 w.%, bezogen auf wässrige Phase) gelöst. Der pH-Wert der wässrigen Phase wird dann durch Zugabe von NaOH (1 M, 8-12 mL) auf einen Wert von 11 eingestellt. Zu dieser wässrigen Phase wird eine Mischung aus Styrol (540.3 g, 80.4w%,), Divinylbenzol (5.5 w.%, 59.7 g), Isododecan (351.5 g (32 w.%)) und Dibenzoylperoxid (BPO) (4.69 g, (0.43 w%) (bezogen auf organische Phase) hinzugegeben. In das Gefäß wird ein Stickstoffstrom von 20 I/h eingeleitet. Der Ansatz wird zunächst bei 190 rpm für 1 h auf 73 °C aufgeheizt, dann 7 h bei dieser Temperatur gehalten, dann über eine Stunde hinweg auf 95 °C geheizt und wieder für 2 h bei dieser Temperatur gehalten und dann auf Raumtemperatur abgekühlt. In diesem Beispiel wurden 569 g Polymerisat und ein Feinanteil von 6.9 g isoliert.

### Beispiel 5

### (nicht erfindungsgemäß, auf die Verwendung eines niedrigmolekularen Dispergiermittels Komponente b.) wurde verzichtet und der Initiator aus dem Beispiel 2 aus EP-A-0964002 wurde eingesetzt)

Das Beispiel 4 wird wiederholt, wobei anstelle des Initiators Benzoylperoxid (BPO), 3,23 g tert.-Butylperoxy-2-ethyhexanoat (T21s) eingesetzt wird. In diesem Beispiel wurden 522 g Polymerisat und ein Feinanteil von 10.2 g isoliert.

### Beispiel 6

### (nicht erfindungsgemäß, auf die Verwendung eines hochmolekularen Dispergiermittels Komponente a.) wurde verzichtet)

Das Beispiel 4 wird wiederholt, wobei anstelle von Typ A die gleiche Gewichtsmenge von 2-Hydroxypropylmethylcellulose (HPMC), CAS: 9004-65-3, durchschnittliche Viskosität, 2% in Wasser @20°C: 100 mPas, Methoxyl: 21.5 mol%, Hydroxypropyl: 9.5 mol%) und einem zahlenmittleren Molekulargewicht von 33500 g/mol (Typ B) eingesetzt wird (Gewichtsverhältnis Typ A zu Typ B: 1 :1). In diesem Beispiel wurden 574 g Polymerisat und ein Feinanteil von 7.8 g isoliert.

### Beispiel 7

### (nicht erfindungsgemäß, auf die Verwendung eines hochmolekularen Dispergiermittels Komponente a.) wurde verzichtet und der Initiator aus dem Beispiel 2 aus EP-A-0964002 wurde eingesetzt)

Das Beispiel 4 wird wiederholt, wobei anstelle von Typ A, die gleiche Gewichtsmenge 2-Hydroxypropylmethylcellulose (HPMC), CAS: 9004-65-3, durchschnittliche Viskosität, 2% in Wasser @20°C: 100 mPas, Methoxyl: 21.5 Mol%, Hydroxypropyl: 9.5 mol%) und einem zahlenmittleren Molekulargewicht von 33500 g/mol (Typ B) eingesetzt wird. Zusätzlich wird der Initiator BPO durch 3,23 g tert.-Butylperoxy-2-ethyhexanoat (T21s) ersetzt. In diesem Beispiel wurden 570 g Polymerisat und ein Feinanteil von 9.8 g isoliert.

### Beispiel 8

### (nicht erfindungsgemäß, Vergleichsbeispiel 1 aus EP-A-0964002, anstelle von Natriumnitrit wurde Resorcin als Inhibitor eingesetzt)

In einem Glasreaktor wird entionisiertes Wasser (869 mL) und 96.6 g einer wässrigen 2 w% Lösung aus Methylcellulose (durchschnittliche Viskosität 4000 mPas, Sigma Aldrich) vorgelegt. In dieser Lösung wird zusätzlich Dinatriumhydrogenphosphatdecahydrat (4.69 g, 0.48 w.%, bezogen auf wässrige Phase) und Resorcin (c= 0.08 g/L in der wässrigen Phase) gelöst. Der pH-Wert der wässrigen Phase wird dann durch Zugabe von NaOH (1 M, 8-12 mL) auf einen Wert von 11 eingestellt. Zu dieser wässrigen Phase wird eine Mischung aus Styrol (540.3 g, 80.4w%,), Divinylbenzol (5.5 w.%, 59.7 g), Isododecan (351.5 g (32 w.%)) und Dibenzoylperoxid (BPO) (4.69 g, (0.43 w%) (bezogen auf organische Phase) hinzugegeben. In das Gefäß wird ein Stickstoffstrom von 20 I/h eingeleitet. Der Ansatz wird zunächst bei 190 rpm für 1 h auf 73 °C aufgeheizt, dann 7 h bei dieser Temperatur gehalten, dann über eine Stunde hinweg auf 95 °C geheizt und wieder für 2 h bei dieser Temperatur gehalten und dann auf Raumtemperatur abgekühlt. In diesem Beispiel wurden 569 g Polymerisat und ein Feinanteil von 7.2 g isoliert.

### Beispiel 9

### (erfindungsgemäß)

Das Beispiel 1 wird wiederholt, wobei als Dispergiermittel anstellte einer Mischung aus Typ A und Typ B die gleiche Gewichtsmenge einer Mischung aus Hydroxyethylmethylcellulose mit einem Methoxysubstitutionsgrad von 28.5 mol% und einem Hydroxyethoxysubstitutiongrad von 10 mol% und einem zahlenmittleren Molekulargewicht von 95000 g/mol eingesetzt und 2-Hydroxypropylmethylcellulose (HPMC), CAS: 9004-65-3, durchschnittliche Viskosität, 2% in Wasser @20°C: 100 mPas, Methoxyl: 21.5 mol%, Hydroxypropyl: 9.5 mol%) und einem zahlenmittleren Molekulargewicht von 33500 g/mol (Typ B) im Gewichtsverhältnis 1 : 1 eingesetzt wird. Zusätzlich wird dem Reaktionsgemisch Resorcin (0.08 g/l) hinzugefügt. In diesem Beispiel wurden 582 g Perlpolymerisat und ein Feinanteil von 5.7 g isoliert.

**Tabelle 1**

| **Beispiele^{[h]}** | **Celluloseether 1** | **Celluloseether 2** | **Initiator^{[b], [c]}** | **Resorcin [g]** | **Feinanteil^{[i]} [g]** | **Ausbeute [g]** | **Anteil des Feinanteils an Ausbeute** |
|---|---|---|---|---|---|---|---|
| Beispiel 1 | HPMC Typ A^{[f]} | HPMC Typ B^{[g]} | BPO | 0 | 3,8 | 559,1 | 0,68% |
| Beispiel 2 | HPMC Typ A^{[f]} | HPMC Typ B^{[g]} | T21S | 0 | 5,7 | 582,18 | 0,98% |
| Beispiel 3 | HPMC Typ A^{[f]} | HPMC Typ B^{[g]} | T21S | 0,8 | 3,1 | 587,13 | 0,53% |
| Beispiel 4 | HPMC Typ A^{[f]} | - | BPO | 0 | 6,9 | 569,1 | 1,21% |
| Beispiel 5 | HPMC Typ A^{[f]} | - | T21S | 0 | 10,2 | 521,68 | 1,96% |
| Beispiel 6 | HPMC Typ B^{[g]} | - | BPO | 0 | 7,8 | 574,2 | 1,36% |
| Beispiel 7 | HPMC Typ B^{[g]} | - | T21S | 0 | 9,80 | 570,73 | 1,72% |
| Beispiel 8^{[d]} | Methylcellulose | - | T21S | 0,08 | 7,2 | 569,34 | 1,26% |
| Beispiel 9 | Hydroxyethylmethylcellulose | HPMC Typ B^{[g]} | BPO | 0,08 | 4,1 | 561,0 | 0,73% |

| | | | | | | | |
|---|---|---|---|---|---|---|---|
| [a] maximale Ausbeute 600 g, [b] Benzoylperoxid (BPO), [c] tert.-Butylperoxy-2-ethylhexanoat (T21s), [d] Vergleichsversuch zu EP-A-0964002, anstelle von Natriumnitrit wurde Resorcin als Inhibitor eingesetzt, [e] Zielkornfraktion zwischen 20-100 µm, [f] bevorzugte Hydroxypropylmethylcellulose (HPMC) beschrieben unter a.), [g] bevorzugte Hydroxypropylmethylcellulose (HPMC) beschrieben unter b), [h] Beispiel 1 bis 3 sind erfindungsgemäß, **Beispiele 4 bis 8 sind Vergleichsversuche.[i]** Feinanteil = polymerer Feinanteil. | | | | | | | |

Die erfindungsgemäßen Beispiele 1 bis 3 und 9 belegen, dass durch die Verwendung eines Dispergiermittelgemisches umfassend spezielle Hydroxyalkylmethylcellulosen der polymere Feinanteil bei der Herstellung eines Polymers überraschend reduziert werden kann.

## Patentansprüche

1. Verfahren zur Herstellung eines Polymers, **dadurch gekennzeichnet, dass** wenigstens eine monoethylenisch ungesättigte Verbindung und wenigstens eine multiethylenisch, ungesättigten Verbindung, in Gegenwart mindestens eines Initiators, in Gegenwart von Wasser, in Gegenwart eines Porogens und in Gegenwart eines Dispergiermittelgemisches umfassend
a) mindestens eine Hydroxyalkylmethylcellulose mit einem zahlenmittleren Molekulargewicht von 80000 g/mol bis 110000 g/mol und Mischungen dieser Verbindungen
und
b) mindestens eine Hydroxyalkylmethylcellulose mit einem zahlenmittleren Molekulargewicht von 25000 g/mol bis 42000 g/mol und Mischungen dieser Verbindungen
umgesetzt werden.

2. Verfahren zur Herstellung eines Polymers gemäß Anspruch 1, **dadurch gekennzeichnet, dass** die Hydroxyalkylmethylcellulosen unter a.) und b.) ausgewählt sind aus der Gruppe 2-Hydroxypropylmethylcellulose oder Hydroxyethylmethylcellulose und Mischungen dieser Verbindungen.

3. Verfahren zur Herstellung eines Polymers gemäß Anspruch 1 oder 2, **dadurch gekennzeichnet, dass** als Initiatoren Dibenzoylperoxid, Dilauroylperoxid, Bis (p-chlorbenzoyl)peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan oder tert.-Amylperoxy-2-ethylhexan, 2,2'-Azo-bis(isobutyronitril) oder 2,2'-Azobis(2-methylisobutyronitril) oder Mischungen dieser Initiatoren eingesetzt werden.

4. Verfahren zur Herstellung eines Polymers gemäß einem oder mehreren der Ansprüche 1 bis 3, **dadurch gekennzeichnet, dass** als monoethylenisch ungesättigte Verbindungen Styrol, Vinyltoluol, Ethylstyrol, α-Methylstyrol, Chlorstyrol oder Chlormethylstyrol oder Mischungen dieser Verbindungen eingesetzt werden.

5. Verfahren zur Herstellung eines Polymers gemäß einem oder mehreren der Ansprüche 1 bis 4, **dadurch gekennzeichnet, dass** als multiethylenisch, ungesättigten Verbindung Divinylbenzol, Divinyltoluol, Trivinylbenzol, Divinylnaphthalin oder Trivinylnaphtalin oder Mischungen dieser Verbindungen eingesetzt werden.

6. Verfahren zur Herstellung eines Polymers gemäß einem oder mehreren der Ansprüche 1 bis 5, **dadurch gekennzeichnet, dass** als monoethylenisch ungesättigte Verbindungen Styrol und als multiethylenisch, ungesättigten Verbindung Divinylbenzol eingesetzt wird.

7. Verfahren zur Herstellung eines Polymers gemäß einem oder mehreren der Ansprüche 1 bis 6, **dadurch gekennzeichnet, dass** der pH-Wert der wässrigen Phase vor der Polymerisation auf einen Wert zwischen 12 und 8 einstellen.

8. Verfahren zur Herstellung eines Polymers gemäß einem oder mehreren der Ansprüche 1 bis 7, **dadurch gekennzeichnet, dass** als Komponente a.) eine 2 Hydroxypropylmethylcellulose mit einem 2-Hydroxypropylsubstitutionsgrad von 3 bis 15 mol% und einem Methoxysubstitutionsgrad von 26 bis 31 mol% eingesetzt wird.

9. Verfahren zur Herstellung eines Polymers gemäß einem oder mehreren der Ansprüche 1 bis 8, **dadurch gekennzeichnet, dass** als Komponente b.) 2-Hydroxypropylmethylcellulose mit einem Hydroxypropylsubstitutionsgrad von 3 bis 15 mol% und mit einem Methoxysubstitutionsgrad von 18 bis 25 mol% eingesetzt wird.

10. Verfahren zur Herstellung eines Polymers gemäß einem oder mehreren der Ansprüche 1 bis 9, **dadurch gekennzeichnet, dass** das Gewichtsverhältnis der Hydroxyalkylmethylcellulosen a) und b) 3 : 1 bis 1: 1 beträgt.

11. Verfahren zur Herstellung eines Polymers gemäß einem oder mehreren der Ansprüche 1 bis 10, **dadurch gekennzeichnet, dass** die Summe der Konzentration der Hydroxyalkylmethylcellulosen a) und b) 0.15 - 0.3 Gew.% bezogen auf die wässrige Phase beträgt.

12. Verfahren zur Herstellung eines Polymers gemäß einem oder mehreren der Ansprüche 1 bis 11, **dadurch gekennzeichnet, dass** ein Inhibitor insbesondere ausgewählt aus der Gruppe Natriumdithionit, Natriumthiosulfat, Natriumsulfit, Natriumbisulfit, Natriumrhodanid, Ammoniumrhodanid, Hydrochinon, Hydrochinonmonomethylether, Resorcin, Brenzkatechin, tert.-Butylbrenzkatechin oder Pyrogallol eingesetzt wird.

13. Verfahren zur Herstellung eines Polymers gemäß einem oder mehreren der Ansprüche 1 bis 12, **dadurch gekennzeichnet, dass** ein Porogen insbesondere ausgewählt aus der Gruppe Hexan, Octan, Isooctan, Isododecan, Methylethylketon, Methylisobutylketon, Methylisobutylcarbinol oder Octanol eingesetzt wird.

14. Verfahren zur Herstellung eines Polymers gemäß einem oder mehreren der Ansprüche 1 bis 13, **dadurch gekennzeichnet, dass** die Polymerisation bei einer Temperatur von 55 bis 130 °C durchgeführt wird.

15. Verwendung eines Dispergiermittelgemisches umfassend
a) mindestens eine Hydroxyalkylmethylcellulose mit einem zahlenmittleren Molekulargewicht von 80000 g/mol bis 110000 g/mol
und
b) mindestens eine Hydroxyalkylmethylcellulose mit einem zahlenmittleren Molekulargewicht von 25000 g/mol bis 42000 g/mol
zur Herstellung eines makroporösen Polymerisates.

16. Verwendung gemäß Anspruch 15, dass die Herstellung Polystyrol-Divinylbenzol Copolymere betrifft.

17. Verwendung gemäß einem der Ansprüche 15 oder 16, dass der Polymer als Basis zur Herstellung eines Ionenaustauschers verwendet wird.

## Claims

1. Process for preparing a polymer, **characterized in that** at least one monoethylenically unsaturated compound and at least one multiethylenically unsaturated compound are reacted in the presence of at least one initiator, in the presence of water, in the presence of a porogen and in the presence of a dispersant mixture comprising
a) at least one hydroxyalkylmethylcellulose having a number-average molecular weight of 80 000 g/mol to 110 000 g/mol and mixtures of these compounds
and
b) at least one hydroxyalkylmethylcellulose having a number-average molecular weight of 25 000 g/mol to 42 000 g/mol and mixtures of these compounds.

2. Process for preparing a polymer according to Claim 1, **characterized in that** the hydroxyalkylmethylcelluloses under a.) and b.) are selected from the group of 2-hydroxypropylmethylcellulose or hydroxyethylmethylcellulose and mixtures of these compounds.

3. Process for preparing a polymer according to Claim 1 or 2, **characterized in that** the initiators used are dibenzoyl peroxide, dilauroyl peroxide, bis(p-chlorobenzoyl) peroxide, dicyclohexyl peroxydicarbonate, tert-butyl peroctoate, tert-butyl peroxy-2-ethylhexanoate, 2,5-bis(2-ethylhexanoylperoxy)-2,5-dimethylhexane or tert-amylperoxy-2-ethylhexane, 2,2'-azobis(isobutyronitrile) or 2,2'-azobis(2-methylisobutyronitrile), or mixtures of these initiators.

4. Process for preparing a polymer according to one or more of Claims 1 to 3, **characterized in that** the monoethylenically unsaturated compounds used are styrene, vinyltoluene, ethylstyrene, α-methylstyrene, chlorostyrene or chloromethylstyrene, or mixtures of these compounds.

5. Process for preparing a polymer according to one or more of Claims 1 to 4, **characterized in that** the multiethylenically unsaturated compounds used are divinylbenzene, divinyltoluene, trivinylbenzene, divinylnaphthalene or trivinylnaphthalene, or mixtures of these compounds.

6. Process for preparing a polymer according to one or more of Claims 1 to 5, **characterized in that** the monoethylenically unsaturated compound used is styrene and the multiethylenically unsaturated compound used is divinylbenzene.

7. Process for preparing a polymer according to one or more of Claims 1 to 6, **characterized in that** the pH of the aqueous phase prior to the polymerization adjust to a value between 12 and 8.

8. Process for preparing a polymer according to one or more of Claims 1 to 7, **characterized in that** the component a.) used is a 2-hydroxypropylmethylcellulose having a 2-hydroxypropyl degree of substitution of 3 to 15 mol% and a methoxy degree of substitution of 26 to 31 mol%.

9. Process for preparing a polymer according to one or more of Claims 1 to 8, **characterized in that** the component b.) used is a 2-hydroxypropylmethylcellulose having a hydroxypropyl degree of substitution of 3 to 15 mol% and a methoxy degree of substitution of 18 to 25 mol%.

10. Process for preparing a polymer according to one or more of Claims 1 to 9, **characterized in that** the ratio by weight of the hydroxyalkylmethylcelluloses a) and b) is 3 : 1 to 1 : 1.

11. Process for preparing a polymer according to one or more of Claims 1 to 10, **characterized in that** the sum total concentration of the hydroxyalkylmethylcelluloses a) and b) is 0.15 - 0.3% by weight, based on the aqueous phase.

12. Process for preparing a polymer according to one or more of Claims 1 to 11, **characterized in that** an inhibitor is used that is selected in particular from the group of sodium dithionite, sodium thiosulfate, sodium sulfite, sodium bisulfite, sodium thiocyanate, ammonium thiocyanate, hydroquinone, hydroquinone monomethyl ether, resorcinol, catechol, tert-butylcatechol or pyrogallol.

13. Process for preparing a polymer according to one or more of Claims 1 to 12, **characterized in that** a porogen is used that is selected in particular from the group of hexane, octane, isooctane, isododecane, methyl ethyl ketone, methyl isobutyl ketone, methyl isobutyl carbinol or octanol.

14. Process for preparing a polymer according to one or more of Claims 1 to 13, **characterized in that** the polymerization is conducted at a temperature of 55 to 130°C.

15. Use of a dispersant mixture comprising
a) at least one hydroxyalkylmethylcellulose having a number-average molecular weight of 80 000 g/mol to 110 000 g/mol
and
b) at least one hydroxyalkylmethylcellulose having a number-average molecular weight of 25 000 g/mol to 42 000 g/mol
for the preparation of a macroporous polymer.

16. Use according to Claim 15, in that the preparation relates to polystyrene-divinylbenzene copolymers.

17. Use according to either of Claims 15 and 16, in that the polymer is used as a basis for the production of an ion exchanger.

## Revendications

1. Procédé de préparation d'un polymère, **caractérisé en ce qu'**au moins un composé monoéthyléniquement insaturé et au moins un composé multiéthyléniquement insaturé sont transformés en présence d'au moins un initiateur, en présence d'eau, en présence d'un agent porogène et en présence d'un mélange de dispersants comprenant
a) au moins une hydroxyalkylméthylcellulose présentant une masse moléculaire moyenne en nombre de 80.000 g/mole à 110.000 g/mole et les mélanges de ces composés
et
b) au moins une hydroxyalkylméthylcellulose présentant une masse moléculaire moyenne en nombre de 25.000 g/mole à 42.000 g/mole et les mélanges de ces composés.

2. Procédé de préparation d'un polymère selon la revendication 1, **caractérisé en ce que** les hydroxyalkylméthylcelluloses des points a.) et b.) sont choisis dans le groupe 2-hydroxypropylméthylcellulose ou hydroxyéthylméthylcellulose et les mélanges de ces composés.

3. Procédé de préparation d'un polymère selon la revendication 1 ou 2, **caractérisé en ce qu'**on utilise, comme initiateurs, le peroxyde de dibenzoyle, le peroxyde de dilauroyle, le peroxyde de bis-(p-chlorobenzoyle), le peroxydicarbonate de dicyclohexyle, le peroctoate de tert-butyle, le peroxy-2-éthyl-hexanoate de tert-butyle, le 2,5-bis(2-éthylhexanoylperoxy)-2,5-diméthylhexane ou le tert-amylperoxy-2-éthylhexane, le 2,2'-azo-bis(isobutyronitrile) ou le 2,2'-azobis(2-méthylisobutyronitrile) ou les mélanges de ces initiateurs.

4. Procédé de préparation d'un polymère selon l'une ou plusieurs des revendications 1 à 3, **caractérisé en ce qu'**on utilise, comme composés monoéthyléniquement insaturés, le styrène, le vinyltoluène, l'éthylstyrène, l'α-méthylstyrène, le chlorostyrène ou le chlorométhylstyrène ou les mélanges de ces composés.

5. Procédé de préparation d'un polymère selon l'une ou plusieurs des revendications 1 à 4, **caractérisé en ce qu'**on utilise, comme composés multiéthyléniquement insaturés, le divinylbenzène, le divinyltoluène, le trivinylbenzène, le divinylnaphtalène ou le trivinylnaphtalène ou les mélanges de ces composés.

6. Procédé de préparation d'un polymère selon l'une ou plusieurs des revendications 1 à 5, **caractérisé en ce qu'**on utilise, comme composé monoéthyléniquement insaturé, le styrène et, comme composé multiéthyléniquement insaturé, le divinylbenzène.

7. Procédé de préparation d'un polymère selon l'une ou plusieurs des revendications 1 à 6, **caractérisé en ce que** le pH de la phase aqueuse avant la polymérisation règlent à une valeur entre 12 et 8.

8. Procédé de préparation d'un polymère selon l'une ou plusieurs des revendications 1 à 7, **caractérisé en ce qu'**on utilise, comme composant a.), une 2-hydroxypropylméthylcellulose présentant un degré de substitution par 2-hydroxypropyle de 3 à 15% en mole et un degré de substitution par méthoxy de 26 à 31% en mole.

9. Procédé de préparation d'un polymère selon l'une ou plusieurs des revendications 1 à 8, **caractérisé en ce qu'**on utilise, comme composant b.), de la 2-hydroxypropylméthylcellulose présentant un degré de substitution par hydroxypropyle de 3 à 15% en mole et un degré de substitution par méthoxy de 18 à 25% en mole.

10. Procédé de préparation d'un polymère selon l'une ou plusieurs des revendications 1 à 9, **caractérisé en ce que** le rapport pondéral des hydroxyalkylméthylcelluloses a) et b) est de 3:1 à 1:1.

11. Procédé de préparation d'un polymère selon l'une ou plusieurs des revendications 1 à 10, **caractérisé en ce que** la somme de la concentration en hydroxyalkylméthylcelluloses a) et b) est de 0,15 - 0,3% en poids par rapport à la phase aqueuse.

12. Procédé de préparation d'un polymère selon l'une ou plusieurs des revendications 1 à 11, **caractérisé en ce qu'**on utilise un inhibiteur, en particulier choisi dans le groupe dithionite de sodium, thiosulfate de sodium, sulfite de sodium, bisulfite de sodium, thiocyanate de sodium, thiocyanate d'ammonium, hydroquinone, hydroquinonemonométhyléther, résorcinol, catéchol, tert-butylcatéchol ou pyrogallol.

13. Procédé de préparation d'un polymère selon l'une ou plusieurs des revendications 1 à 12, **caractérisé en ce qu'**on utilise un agent porogène, en particulier choisi dans le groupe hexane, octane, isooctane, isododécane, méthyléthylcétone, méthylisobutylcétone, méthylisobutylcarbinol ou octanol.

14. Procédé de préparation d'un polymère selon l'une ou plusieurs des revendications 1 à 13, **caractérisé en ce que** la polymérisation est réalisée à une température de 55°C à 130°C.

15. Utilisation d'un mélange de dispersants comprenant
a) au moins une hydroxyalkylméthylcellulose présentant une masse moléculaire moyenne en nombre de 80.000 g/mole à 110.000 g/mole
et
b) au moins une hydroxyalkylméthylcellulose présentant une masse moléculaire moyenne en nombre de 25.000 g/mole à 42.000 g/mole
pour la préparation d'un polymère macroporeux.

16. Utilisation selon la revendication 15, en ce que la préparation concerne des copolymères de polystyrène-divinylbenzène.

17. Utilisation selon l'une des revendications 15 ou 16, en ce que le polymère est utilisé comme base pour la préparation d'un échangeur d'ions.
